# EUROPÄISCHE PATENTSCHRIFT

(11) **EP 1 544 167 B1**
(45) Veröffentlichungstag und Bekanntmachung des Hinweises auf die Patenterteilung: **23.05.2012**
(21) Anmeldenummer: 04029834.1
(22) Anmeldetag: 16.12.2004
(51) Int. Cl.: C01B 33/021, C01B 33/027, C01B 33/03

(54) **Staub- und porenfreies hochreines Polysiliciumgranulat**
Dust- and pore-free high purity polysilicon granules
Granules de polysilicium de grande pureté exemptes de porosité et ne dégageant pas de poussière

(30) Priorität: 18.12.2003 DE 10359587
(43) Veröffentlichungstag der Anmeldung: 22.06.2005
(73) Patentinhaber: Wacker Chemie AG, 81737 München (DE)
(72) Erfinder: Weidhaus, Dieter, 84489 Burghausen (DE); Crössmann, Ivo, Dr., 84489 Burghausen (DE); Schreieder, Franz, 84367 Tann (DE)
(74) Vertreter: Potten, Holger

(56) Entgegenhaltungen:
- EP-A- 0 896 952
- DE-A1- 19 948 395
- US-A- 4 883 687

## Beschreibung

Die Erfindung betrifft ein staub- und porenfreies hochreines Polysiliciumgranulat, seine Herstellung und Verwendung.

Polysiliciumgranulat ist eine Alternative zum im Siemens-Verfahren hergestellten Polysilicium. Während das Polysilicium im Siemens-Verfahren als zylindrischer Siliciumstab anfällt, der vor seiner Weiterverarbeitung zeit- und kostenaufwändig zu so genanntem Chippoly zerkleinert und ggf. wiederum aufgereinigt werden muss, besitzt Polysiliciumgranulat Schüttguteigenschaften und kann direkt als Rohmaterial z.B. zur Einkristallerzeugung für die Photovoltaik- und Elektronikindustrie eingesetzt werden.

Polysiliciumgranulat wird in einem Wirbelschichtreaktor produziert. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Pyrolysereaktion an der heißen Partikeloberfläche. Dabei scheidet sich elementares Silicium auf den Siliciumpartikeln ab und die einzelnen Partikel wachsen im Durchmesser an. Durch den regelmäßigen Abzug von angewachsenen Partikeln und Zugabe kleinerer Siliciumpartikel als Keimpartikel kann das Verfahren kontinuierlich mit allen damit verbundenen Vorteilen betrieben werden. Als siliciumhaltiges Eduktgas sind Silicium-Halogenverbindungen (z.B. Chlorsilane oder Bromsilane), Monosilan (SiH₄), sowie Mischung dieser Gase mit Wasserstoff beschrieben. Derartige Abscheideverfahren und Vorrichtungen hierzu sind beispielsweise aus WO 96/41036, DE 3638931 C2 (entspricht US 4,786,477) oder DE 199 48 395 A1 bekannt.

Das aus den Abscheideverfahren erhaltene Siliciumgranulat zeichnet sich durch hohe Reinheit, d.h. durch einen niedrigen Gehalt an Dotierstoffen (insbesondere Bor und Phosphor), Kohlenstoff und Metallen aus.

Aus US 4,883,687 ist ein Siliciumgranulat bekannt, das anhand der Korngrößenverteilung, des Bor-, Phosphor- und Kohlenstoffgehalts, des Oberflächenstaubgehalts, seiner Dichte und Schüttdichte definiert ist.

In US 4,851,297 ist ein dotiertes Polysiliciumgranulat beschrieben, in US 5,242,671 ein Polysiliciumgranulat mit reduziertem Wasserstoffgehalt.

US 5,077,028 beschreibt ein Verfahren, bei dem ein Polysiliciumgranulat, welches sich durch einen niedrigen Chlorgehalt auszeichnet, aus einem Chlorsilan abgeschieden wird.

EP 0 896 952 A1 offenbart ein Verfahren zur Herstellung von hochreinem Siliciumgranulat durch thermische Zersetzung oder Wasserstoffreduktion eines Siliciumquellengases. Dabei hat das Siliciumquellengas eine Temperatur unterhalb von 900°C; die Siliciumpartikel in der Reaktionszone haben eine Temperatur von mehr als 900°C.

Das heute in großem Maßstab produzierte Polysiliciumgranulat hat eine poröse Struktur und daraus resultierend zwei gravierende Eigenschaftsnachteile:
- In den Poren ist Gas eingeschlossen. Dieses Gas wird beim Aufschmelzen frei und stört.die Weiterverarbeitung des Polysiliciumgranulats. Es wird daher versucht, den Gasgehalt des Polysiliciumgranulats zu reduzieren. Dabei ist aber, wie in US 5,242,671 beschrieben, ein zusätzlicher Arbeitsschritt nötig, was die Herstellkosten erhöht und zudem eine zusätzliche Kontamination des Granulats bewirkt.
- Das Polysiliciumgranulat ist nicht besonders abriebsfest. Das bedeutet, dass bei der Handhabung des Granulats z.B. beim Transport zum Anwender feiner Siliciumstaub entsteht. Dieser Staub stört in mehrfacher Hinsicht:
   Er stört bei der Weiterverarbeitung des Polysiliciumgranulats, da er beim Aufschmelzen des Granulats aufschwimmt;
   er stört beim Transport des Polysiliciumgranulats innerhalb der Produktionsanlage, weil er eine Belagbildung an Rohrleitungen verursacht und es zu einem Verblocken von Armaturen kommt;
   er ist aufgrund seiner großen spezifischen Oberfläche ein potentieller Kontaminationsträger.

Der Abrieb führt bereits bei der Herstellung des Polysiliciumgranulats in der Wirbelschicht zu Verlusten.

Nachteiligerweise entsteht bei der heute üblichen Herstellung auf Basis von Monosilan als siliciumhaltigem Eduktgas zusätzlich zum Abrieb im Abscheideprozess direkt Staub als Folge einer homogenen Gasphasenreaktion und anschließender Rekristallisation.

Dieser Feinststaub kann zwar teilweise vom Produkt abgetrennt werden, was aber ebenfalls Aufwand, Materialverlust und damit Zusatzkosten bedeutet.

Aufgabe der Erfindung ist es, ein polykristallines Siliciumgranulat zur Verfügung zu stellen, welches die Nachteile des bekannten Polysiliciumgranulats nicht aufweist.

Gegenstand der vorliegenden Erfindung ist ein polykristallines Siliciumgranulat welches dadurch gekennzeichnet ist, dass es aus Partikeln besteht, die eine Dichte größer als 99,9 % der theoretischen Feststoffdichte und damit einen Porenanteil kleiner als 0,1 % sowie eine Oberflächenrauhigkeit Rₐ kleiner als 150 nm besitzen.

Bevorzugt besitzen die Partikel eine Oberflächenrauhigkeit Rₐ kleiner als 100 nm. Im Vergleich dazu besitzt ein Siliciumgranulat gemäß Stand der Technik eine Oberflächenrauhigkeit Rₐ von etwa 250 nm.

Die Bestimmung der Oberflächenrauhigkeit erfolgt dabei mittels Messung mit Weißlichtinterferometrie und entsprechender Auswertung nach EN ISO 4287.

Die aus den genannten Merkmalen resultierende hohe Homogenität des erfindungsgemäßen Granulats führt zu einer hohen Abriebsfestigkeit des Materials. Es kommt somit beim Handling des Materials zu einer geringeren Staubbildung.

Das polykristalline Siliciumgranulat weist vorzugsweise eine Schüttdichte zwischen 1200 kg/m³ und 1550 kg/m³ auf, bevorzugt zwischen 1350 kg/m³ und 1550 kg/m³.

Die Partikel des Granulats sind bevorzugt von kugelförmiger Gestalt und weisen einen Korndurchmesser von 100-3000 µm, bevorzugt von 300 bis 2000 µm, auf.

Die Partikel des Granulats liegen bevorzugt zu mehr als 80Gew.%, besonders bevorzugt zu mehr als 85Gew.%, "as grown" vor. "As grown"-Partikel zeigen bis zu einer 100-fachen Vergrößerung keine Zeichen einer mechanischen Bearbeitung, d.h. es sind keine Bruchkanten sichtbar.

Bevorzugt haben die Granulatpartikel einen Dotierstoffgehalt an Phosphor kleiner als 300 ppta, besonders bevorzugt kleiner als 150 ppta.

Bevorzugt haben die Partikel einen Dotierstoffgehalt an Bor kleiner als 300 ppta, bevorzugt kleiner als 100 ppta.

Bevorzugt haben die Partikel einen Gehalt an Kohlenstoff kleiner als 250 ppba, bevorzugt kleiner als 100 ppba.

Bevorzugt haben die Partikel einen Gesamtgehalt an den Metallen Fe, Cr, Ni, Cu, Ti, Zn und Na von weniger als 50 ppbw, bevorzugt weniger als 10 ppbw.

Das erfindungsgemäße Polysiliciumgranulat lässt sich vorzugsweise in einem strahlungsbeheizten Fließbettreaktor, wie in DE 19948395 A1 beschrieben, herstellen.

Vorzugsweise wird das erfindungsgemäße hochreine polykristalline Siliciumgranulat durch Abscheiden eines Reaktionsgases auf Keimkristallen aus Silicium in einem Fließbett hergestellt. Das Reaktionsgas besteht bevorzugt aus einer Mischung von Wasserstoff und Halogensilanen, besonders bevorzugt aus einer Mischung von Wasserstoff und Trichlorsilan. Die Abscheidung erfolgt vorzugsweise bei einer Temperatur der Wirbelschicht im Reaktionsbereich von 700°C bis 1200 °C. Die vorgelegten Keimkristalle in der Wirbelschicht werden mit Hilfe eines siliciumfreien Fluidisiergases, vorzugsweise Wasserstoff, fluidisiert und mittels Temperaturstrahlung erhitzt. Die Wärmeenergie wird mittels flächiger Heizstrahler gleichmäßig über den Umfang des Fließbettes eingetragen. In der Reaktionszone wird das siliciumhaltige Reaktionsgas aufgrund einer CVD-Reaktion als elementares Silicium auf den Siliciumteilchen abgelagert. Nicht abreagiertes Reaktionsgas, Fluidisierungsgas und gasförmige Nebenreaktionsprodukte werden aus dem Reaktor entfernt. Durch regelmäßiges Abziehen von mit dem abgelagerten Silicium versehenen Partikeln aus dem Fließbett und Zugabe von Keimkristallen kann das Verfahren kontinuierlich betrieben werden.

Die Temperatur der Wirbelschicht im Reaktionsbereich beträgt bevorzugt von 850°C bis 1100°C, besonders bevorzugt von 900°C bis 1050 °C.

Das Reaktionsgas wird vorzugsweise über eine oder mehrere Düsen in die Wirbelschicht eingedüst.

Der Druck im Fließbett liegt vorzugsweise zwischen 0,1 MPa und 1,1 MPa, besonders bevorzugt zwischen 0,15 MPa und 0,7 MPa, insbesondere bevorzugt zwischen 0,2 MPa bis 0,5 MPa.

Die Konzentration des siliciumhaltigen Reaktionsgases beträgt bezogen auf die gesamte Gasmenge durch die Wirbelschicht vorzugsweise 10 mol% bis 50 mol%, besonders bevorzugt 15 mol% bis 40 mol%.

Die Konzentration des siliciumhaltigen Reaktionsgases in der Reaktionsgasdüse beträgt bezogen auf die gesamte Gasmenge durch die Reaktionsgasdüsen vorzugsweise von 20 mol% bis 50 mol%.

Die gemittelte Verweilzeit des Reaktionsgases in der Wirbelschicht beträgt vorzugsweise 100 ms bis 2 s, bevorzugt mehr als 150 ms bis 1,5 s, besonders bevorzugt mehr als 200 ms bis 1,5 s.

Die Wirbelschicht wird vorzugsweise als blasenbildende Wirbelschicht betrieben. Eine stoßende Betriebsweise (engl. slugging mode), bei der es zum Anwachsen von Blasen in der Wirbelschicht bis auf den Durchmesser der Wirbelschicht kommt, die dann verdichtetes Wirbelschichtmaterial als Feststoffkolben nach oben schieben bis die Blasen kollabieren, wird vorzugsweise durch Maßnahmen wie z.B. die Wahl eines möglichst kleinen Verhältnisses von Betthöhe zu Bettdurchmesser (flaches Bett) oder durch die Anordnung von mechanischen Blasenbrechern in der Wirbelschicht vermieden.

Bei der Herstellung des erfindungsgemäßen Polysiliciumgranulats tritt nur eine geringe Staubbildung auf. Diese sowie der geringere Abrieb führen zu erhöhten Ausbeuten, da kaum Feinstaub aus der Wirbelschicht ausgetragen wird, der bei bekannten Verfahren immer zu einem Materialverlust führt. Auch die weiteren bereits genannten Probleme, die mit einer Staubbildung einhergehen, treten mit dem erfindungsgemäßen Granulat nicht auf. Aufgrund der Porenarmut des Granulats kann auf eine "Entgasungsstufe" wie z.B. in US 5,242,671 beschrieben verzichtet werden. Dies gilt insbesondere bei der Verwendung von Trichlorsilan als Eduktgas, sowie einer Verdünnung mit Wasserstoff und einer Prozessführung wie als bevorzugt beschrieben (Druck, Temperatur, kein Stoßen).

Bei der Herstellung von Granulat kann der Feinanteil vom Produkt abgesiebt und in den Reaktor zurückgeführt werden. In diesem Fall lässt sich je nach Trennschnitt der Anteil an Partikeln mit Bruchkanten im erfindungsgemäßen Granulat auf sehr kleine Werte (Werte < 5, bevorzugt <1%) reduzieren, so dass die Partikel eines solchen Granulats zu mehr als 95Gew.%, besonders bevorzugt mehr als 99Gew.%, ohne Bruchkanten vorliegen. Bei der Verwendung des Polysiliciumgranulats z.B. zum multikristallinen Blockgießen, zum Folienziehen oder zum Einkristallziehen zeigt das erfindungsgemäße Material Vorteile. Prozessstörungen wie schlechte Aufschmelzraten, Aufschwimmen von Staub, Verblocken von Zuführarmaturen durch Feinstaub treten nicht mehr auf. Probleme wie das Entgasen beim Aufschmelzen des Materials, die zum Aufwallen und Spritzen an der Schmelzoberfläche führen, werden vermieden.

Das erfindungsgemäße Granulat ermöglicht somit eine störungsfreie Weiterverarbeitung z.B. zu Produkten für die Photovoltaik oder die Elektronik. Insbesondere eignet es sich für die störungsfreie Herstellung
- von multikristallinen Siliciumblöcken z.B. mittels Blockgießen;
- von multikristallinen Siliciumfolien z.B. mittels Foliengießen (z.B. Silicon-Film™ oder "RFG"-Verfahren) oder mittels Folienziehen (z.B. "EFG"-Verfahren);
- von monokristallinen Kristallen z.B. nach dem CZ- oder FZ-Verfahren für die Photovoltaik- und die Elektronikindustrie.

Die Erfindung betrifft somit auch die Verwendung des erfindungsgemäßen Granulats für die genannten Zwecke.
Fig. 1 zeigt die rasterelektronenmikroskopische Aufnahme in 2000facher Vergrößerung eines oberflächengeätzten Schliffbilds (80 sek. HF/HNO₃ 1:11) eines erfindungsgemäßen Polysiliciumgranulats hergestellt in Beispiel 1.

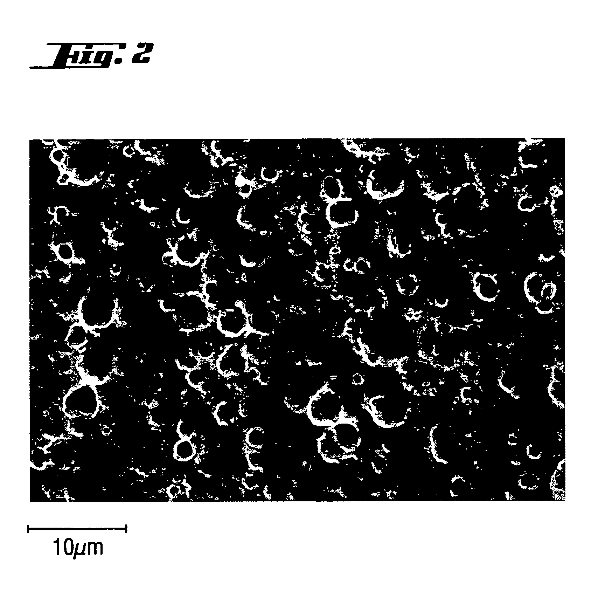

Fig. 2 zeigt die rasterelektronenmikroskopische Aufnahme in 2000facher Vergrößerung eines Schliffbilds eines Polysiliciumgranulats nach Oberflächenätzung (80 sek. HF/HNO₃ 1:11) hergestellt in einem auf Silan (SiH₄) basierenden Verfahren, käuflich erhältlich von der Firma MEMC Pasadena Inc. unter der Bezeichnung "Dehydrogenated".

Die hohe Homogenität der Partikel des erfindungsgemäßen Granulats zeigt sich im Vergleich der rasterelektronenmikroskopische Aufnahmen (REM) von erfindungsgemäßem Granulat (aus Bsp. 1) und Granulat gemäß dem Stand der Technik. Bei der Betrachtung der vorab geätzten Schliffbilder ist die unterschiedliche Struktur deutlich erkennbar

Das folgende Beispiel dient der weiteren Erläuterung der Erfindung.

### Beispiel 1:

Der Reaktoraufbau entspricht im Wesentlichen dem in DE 19948395 A1 offenbarten Reaktoraufbau. Zum Reaktoraufbau wird daher auf diese Schrift, insbesondere die Beispiele, verwiesen. In einem Quarzrohr mit Innendurchmesser von 204 mm und einer Höhe von 2000 mm wurde Siliciumgranulat mit einer Korngrößenverteilung von 150 µm bis 1000 µm vorgelegt. Diese Schüttung wurde durch am Reaktorboden befindliche Düsen mit Wasserstoff fluidisiert und über einen Strahlungsheizer, der das Quarzrohr zylindrisch umschließt, aufgeheizt. Über eine zentrale Reaktionsgasdüse, die 200 mm oberhalb der Bodengaseindüsung endet, wird ein Reaktionsgasgemisch bestehend aus Wasserstoff und Trichlorsilan in die Wirbelschicht eingedüst. Wasserstoff und Trichlorsilan werden in der für die Halbleiterindustrie üblichen Reinheit verwendet.

Folgende stationäre Prozessbedingungen wurden eingestellt:
Bettgewicht 27 kg entspricht einer Wirbelschichthöhe von ca. 0,55 m über der Reaktionsgaseindüsung;
Wirbelschichttemperatur: 950°C;
Prozessdruck: 0,18 MPa;
Inertgas durch die Bodendüsen: 13,7 m³/h(Standardbed.) Wasserstoff; Reaktionsgas durch die zentrale Reaktionsgasdüse: 27,5 kg/h Trichlorsilan und 7 m³/h(Standardbed.) Wasserstoff. Daraus ergibt sich eine Trichlorsilankonzentration von 39 mol% in der Reaktionsgasdüse und 19 mol% gemittelt über den Gesamtgasstrom.

Der Reaktor wurde mit einer Strahlungsleistung von 27 kW bei der angegebenen Wirbelschichttemperatur stationär betrieben, wobei das Bettgewicht durch zyklisches Abziehen von Granulat aus der Wirbelschicht
annähernd konstant gehalten wurde. Durch zyklische Zugabe von feinen Silicium-Keimkristallen mit einer Korngrößenverteilung von 150 µm bis 500 µm wurde die Kornverteilung innerhalb der Wirbelschicht stabilisiert. Während der gesamten Abscheidezeit wurde die Wirbelschicht als blasenbildende Wirbelschicht ohne Anzeichen von Stoßen betrieben.

Insgesamt wurden in diesem Versuch in 384 Stunden 420 kg an Silicium abgeschieden was einer mittleren Abscheiderate von 1094 g/h entsprach.

Materialproben aus diesem Versuch wurden auf Dichte, Oberflächenrauhigkeit sowie auf Fremdstoffkonzentrationen untersucht:

Dotierstoffe wurden gem. ASTM F1389-00 an monokristallinen Proben bestimmt.

Kohlenstoff wurde gem. ASTM F1391-93(2000) an monokristallinen Proben bestimmt.

Die üblicherweise spezifizierten Metalle (Fe, Cr, Ni, Cu, Zn, Na) wurden analog ASTM F1724-01 mit ICP-MS bestimmt.

Die Feststoffdichte wurde nach der Temperaturflotationsmethode zur Dichtebestimmung (Schwebeverfahren) gemessen; die Berechnung erfolgte gemäß A. Kozdon, H. Wagenbreth, D. Hoburg: Density difference measurements on silicon single-crystals by the temperature-of-flotation method. PTB-Bericht PTB-W-43, Braunschweig, 1990.

Die Bestimmung der Oberflächenrauhigkeit erfolgt mittels Messung mit Weißlichtinterferometrie und entsprechender Auswertung nach EN ISO 4287.

Die Partikel des Granulats hatten die folgenden Eigenschaften:

| | |
|---|---|
| Dichte: | ρ = 2328,4 kg/m³ ± 2, 0 kg/m³ |
| Oberflächenrauhigkeit: | Rₐ = 87,8 nm ± 34,4 nm |
| Metallkonzentration: | 10,4 ng/g ± 1,0 ng/g (ng/g = ppbw) |
| Dotierstoffkonzentration: | 207 ppta B ± 15 ppta B |
| | 220 ppta P ± 34 ppta P |
| Kohlenstoffkonzentration: | 87 ppba C ± 9 ppba C |

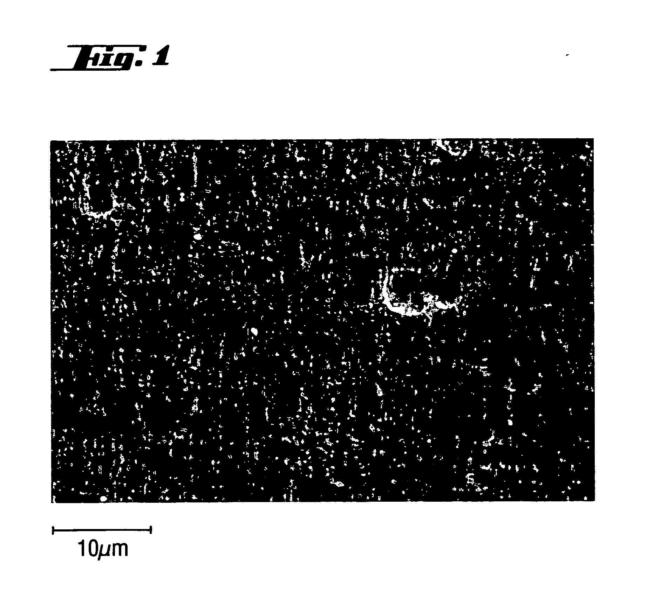

Fig. 1 zeigt ein oberflächengeätztes Schliffbild des Materials.

## Patentansprüche

1. Polykristallines Siliciumgranulat, welches **dadurch gekennzeichnet ist, dass** es aus Partikeln besteht, die eine Dichte größer als 99,9 % der theoretischen Feststoffdichte und damit einen Porenanteil kleiner als 0,1 % sowie eine Oberflächenrauhigkeit Rₐ kleiner als 150 nm besitzen.

2. Polykristallines Siliciumgranulat nach Anspruch 1, **dadurch gekennzeichnet, dass** die Partikel eine Oberflächenrauhigkeit Rₐ kleiner als 100 nm besitzen.

3. Polykristallines Siliciumgranulat nach Anspruch 1 oder 2, **dadurch gekennzeichnet, dass** das Granulat eine Schüttdichte zwischen 1300 kg/m³ und 1550 kg/m³ besitzt.

4. Polykristallines Siliciumgranulat nach einem der Ansprüche 1 bis 3, **dadurch gekennzeichnet, dass** die Partikel eine kugelförmige Gestalt besitzen und einen mittleren Korndurchmesser von 100-3000 µm, bevorzugt von 300 bis 2000 µm, aufweisen.

5. Polykristallines Siliciumgranulat nach einem der Ansprüche 1 bis 4, **dadurch gekennzeichnet, dass** die Partikel zu mehr als 80Gew.%, bevorzugt zu mehr als 85Gew.% "as grown", also ohne sichtbare Anzeichen mechanischer Bearbeitung wie z.B. Bruchkanten vorliegen.

6. Polykristallines Siliciumgranulat nach einem der Ansprüche 1 bis 4, **dadurch gekennzeichnet, dass** die Partikel
eine Teilchengröße zwischen 100 µm und 3000 µm, bevorzugt zwischen 300 µm und 2000 µm haben,
einen Dotierstoffgehalt an Phosphor kleiner als 300 ppta, bevorzugt kleiner als 150 ppta aufweisen,
einen Dotierstoffgehalt an Bor kleiner als 300 ppta, bevorzugt kleiner als 100 ppta aufweisen,
einen Gehalt an Kohlenstoff kleiner als 250 ppba, bevorzugt kleiner als 100 ppba aufweisen.

7. Verfahren zur Herstellung eines polykristallinen Siliciumgranulates gemäß Anspruch 1 bis 6, **dadurch gekennzeichnet, dass** Keimkristalle aus Silicium in einer blasenbildenden Wirbelschicht vorgelegt werden, wobei die Wirbelschicht durch ein siliciumfreies Fluidisiergas fluidisiert wird, und die Wirbelschicht mittels Temperaturstrahlung auf eine Reaktionstemperatur zwischen 700 und 1200°C aufgeheizt ist und ein siliziumhaltiges Reaktionsgas mittels Düsen in die heiße Wirbelschicht oberhalb der Inertgaszufuhr eingedüst wird, so dass sich dort Silicium auf den Keimkristallen abscheidet, wobei die gemittelte Verweilzeit des Reaktionsgases in der Wirbelschicht 100 ms bis 2 s beträgt.

## Claims

1. Polycrystalline granulated silicon which is **characterized in that** it is composed of particles which have a density of greater than 99.9% of the theoretical solid density and therefore have a pore content of less than 0.1% and a surface roughness Rₐ of less than 150 nm.

2. Polycrystalline granulated silicon according to Claim 1, **characterized in that** the particles have a surface roughness Rₐ of less than 100 nm.

3. Polycrystalline granulated silicon according to Claim 1 or 2, **characterized in that** the granulated silicon has a bulk density of between 1300 kg/m³ and 1550 kg/m³.

4. Polycrystalline granulated silicon according to one of Claims 1 to 3, **characterized in that** the particles are spherical in form and have a mean grain diameter of 100-3000 µm, preferably from 300 to 2000 µm.

5. Polycrystalline granulated silicon according to one of Claims 1 to 4, **characterized in that** more than 80% by weight, preferably more than 85% by weight, of the particles are "as grown", i.e. without visible signs of mechanical processing, such as for example broken edges.

6. Polycrystalline granulated silicon according to one of Claims 1 to 4, **characterized in that** the particles have a particle size of between 100 µm and 3000 µm, preferably between 300 µm and 2000 µm, a phosphorus dopant content of less than 300 ppta, preferably less than 150 ppta, a boron dopant content of less than 300 ppta, preferably less than 100 ppta, a carbon content of less than 250 ppba, preferably less than 100 ppba.

7. Process for producing a polycrystalline granulated silicon according to Claims 1 to 6, **characterized in that** seed crystals of silicon are introduced into a bubble-forming fluidized bed, the fluidized bed being fluidized by a silicon-free fluidizing gas, and the fluidized bed is heated by means of thermal radiation to a reaction temperature of between 700 and 1200°C and a silicon-containing reaction gas is injected into the hot fluidized bed above the inert gas feed by means of nozzles, so that silicon is deposited on the seed crystals there, the mean residence time of the reaction gas in the fluidized bed being from 100 ms to 2 s.

## Revendications

1. Granulat de silicium polycristallin, **caractérisé en ce qu'**il est constitué de particules qui possèdent une densité supérieure à 99,9 % de la densité solide théorique et par conséquent, une proportion de pores inférieure à 0,1 %, ainsi qu'une rugosité de surface Rₐ inférieure à 150 nm.

2. Granulat de silicium polycristallin selon la revendication 1, **caractérisé en ce que** les particules possèdent une rugosité de surface Rₐ inférieure à 100 nm.

3. Granulat de silicium polycristallin selon la revendication 1 ou 2, **caractérisé en ce que** le granulat de silicium possède une densité apparente comprise entre 1 300 kg/m³ et 1 550 kg/m³.

4. Granulat de silicium polycristallin selon l'une quelconque des revendications 1 à 3, **caractérisé en ce que** les particules possèdent une configuration sphérique et présentent un diamètre de grain moyen de 100 à 3 000 µm, de préférence de 300 à 2 000 µm.

5. Granulat de silicium polycristallin selon l'une quelconque des revendications 1 à 4, **caractérisé en ce que** les particules se présentent à plus de 80 % en poids, de préférence à plus de 85 % en poids, sous forme « as grown », c'est-à-dire sans signes visibles d'un traitement mécanique tels que p. ex. des lignes de cassure.

6. Granulat de silicium polycristallin selon l'une quelconque des revendications 1 à 4, **caractérisé en ce que** les particules
ont une taille de particule comprise entre 100 µm et 3 000 µm, de préférence entre 300 µm et 2 000 µm,
présentent une teneur en dopant phosphore inférieure à 300 ppta, de préférence inférieure à 150 ppta,
présentent une teneur en dopant bore inférieure à 300 ppta, de préférence inférieure à 100 ppta,
présentent une teneur en carbone inférieure à 250 ppba, de préférence inférieure à 100 ppba.

7. Procédé de fabrication d'un granulat de silicium polycristallin selon les revendications 1 à 6, **caractérisé en ce que** des germes cristallins de silicium sont chargés dans un lit fluidisé formant des bulles, le lit fluidisé étant fluidisé par un gaz de fluidisation exempt de silicium et le lit fluidisé étant porté par un rayonnement thermique à une température de réaction comprise entre 700 et 1 200 °C, et un gaz réactionnel contenant du silicium est injecté par des buses dans le lit fluidisé chaud au-dessus de l'alimentation de gaz inerte, de manière à ce que le silicium se dépose sur les germes cristallins, le temps de séjour moyen du gaz réactionnel dans le lit fluidisé étant de 100 ms à 2 s.
